(19) Europäisches Patentamt
European Patent Office
Office européen des brevets

(11) EP 0 775 720 A1

(12) **DEMANDE DE BREVET EUROPEEN**

(43) Date de publication:
**28.05.1997 Bulletin 1997/22**

(21) Numéro de dépôt: **96203142.3**

(22) Date de dépôt: **11.11.1996**

(51) Int. Cl.[6]: **C08J 5/18**, C08K 3/00, C08K 5/00 // C08L67:04

(84) Etats contractants désignés:
**AT BE CH DE DK ES FI FR GB GR IT LI NL PT SE**

(30) Priorité: **22.11.1995 FR 9513991**

(71) Demandeur: **SOLVAY (Société Anonyme)**
**B-1050 Bruxelles (BE)**

(72) Inventeurs:
- **Claeys, Ivan**
**1981 Zemst (Hofstade) (BE)**
- **Dehennau, Claude**
**1410 Waterloo (BE)**

(74) Mandataire: **Marckx, Frieda et al**
**Solvay S.A.**
**Département de la Propriété Industrielle**
**310, rue de Ransbeek**
**1120 Bruxelles (BE)**

# (54) Film semi-rigide en poly-E-caprolactone et procédé pour le produire

(57) Film en poly-ε-caprolactone dont la masse moléculaire moyenne en poids est égale à 75 000 g/mole au moins présentant un module en traction d'au moins 600 MPa dans le sens vertical et longitudinal et un retrait ne dépassant pas 1% dans les deux directions en-dessous de la zone de fusion de la poly-ε-caprolactone.

Procédé pour produire un film en poly-ε-caprolactone selon lequel on extrude la poly-ε-caprolactone en ligne avec sa fabrication à l'intervention de trialkoxyde d'aluminium comme amorceur au travers d'une filière, de préférence une filière plate, dont la température ne dépasse pas 160°C.

Les films selon l'invention conviennent pour la confection de films pour l'emballage, pour la protection des récoltes ou encore pour des couches-culottes.

EP 0 775 720 A1

## Description

La présente invention concerne un nouveau film en poly-ε-caprolactone, plus particulièrement un film semi-rigide en poly-ε-caprolactone présentant une stabilité dimensionnelle améliorée en-dessous de sa zone de fusion, ainsi qu'un procédé pour le produire.

Les polymères de l'ε-caprolactone constituent des polymères thermoplastiques biocompatibles et biodégradables bien connus dont les débouchés les plus prometteurs se situent, précisément en raison de ces propriétés particulières, dans le domaine des films, tels que des films pour l'emballage, des films de protection des récoltes ou encore des films pour couches-culottes.

Il est également connu que pour toutes les applications impliquant la transformation des poly-ε-caprolactones en articles finis ou semi-finis par mise en oeuvre en fondu, il est hautement souhaitable de disposer de poly-ε-caprolactones solides de masses moléculaires moyennes en poids ($M_w$) élevées et généralement au moins égales à environ 75 000 g/mole.

Traditionnellement, les films en polymères thermoplastiques sont fabriqués par extrusion, en bulle soufflée ou en filière plate, au départ de granules de polymères.

Il a maintenant été constaté que les films en poly-ε-caprolactone fabriqués par extrusion de granules de poly-ε-caprolactones de masses moléculaires moyennes en poids élevées sont relativement souples: ils présentent généralement un module en traction inférieur à 500 MPa, le plus souvent de l'ordre d'environ 300 à 400 MPa.

Pour de nombreuses applications des films en poly-ε-caprolactone, les cahiers des charges imposent une contrainte minimale au seuil d'écoulement ou un module élastique que l'on ne peut atteindre avec les films relativement souples de l'art antérieur.

Il est connu qu'on peut augmenter la rigidité d'un film en polymère thermoplastique en soumettant le film à un étirage dans le sens longitudinal et/ou transversal. Toutefois, la rigidification qui en résulte se fait généralement aux dépens de l'allongement à la rupture. De plus, les films ainsi étirés subissent un retrait non négligeable à des températures inférieures à la zone de fusion du polymère constitutif, ledit retrait dépassant généralement 2%.

La présente invention vise à procurer de nouveaux films en poly-ε-caprolactone qui soient plus rigides et présentent une stabilité dimensionnelle améliorée.

A cet effet, l'invention concerne un film semi-rigide en poly-ε-caprolactone dont la masse moléculaire moyenne en poids ($M_w$) est égale à 75 000 g/mole au moins, caractérisé en ce qu'il présente un module en traction d'au moins 600 MPa dans le sens longitudinal et transversal et un retrait ne dépassant pas 1% dans les deux directions en-dessous de la zone de fusion de la poly-ε-caprolactone.

Par poly-ε-caprolactone, on entend désigner aux fins de la présente invention aussi bien les homopolymères de l'ε-caprolactone que les copolymères d'ε-caprolactone avec d'autres lactones à teneur prépondérante en ε-caprolactone, tels que par exemple, les copolymères d'ε-caprolactone et de β-propiolactone ou encore d'ε-caprolactone et de δ-valérolactone à teneur prépondérante en ε-caprolactone. Il est donc entendu que les films en poly-ε-caprolactone selon l'invention peuvent être constitués aussi bien d'homopolymères que de copolymères de l'ε-caprolactone. Néanmoins, ces films sont constitués de préférence d'homopolymères d'ε-caprolactone.

Par module en traction, on entend aux fins de la présente invention le module en traction évalué selon la norme ISO527-3/1993 à la vitesse de traction de 1 mm/min sur des éprouvettes de type 2.

Le plus souvent, le film en poly-ε-caprolactone selon l'invention présente un module en traction d'au moins 700 MPa dans le sens longitudinal et dans le sens transversal et plus particulièrement encore d'au moins 700 MPa dans le sens longitudinal et d'au moins 850 MPa dans le sens transversal. En général, le module en traction ne dépasse pas 2000 MPa. Le plus souvent, il ne dépasse pas 1500 MPa.

On donne par ailleurs la préférence aux films en poly-ε-caprolactone présentant un retrait ne dépassant pas 0,5% dans les deux directions en dessous de la zone de fusion de la poly-ε-caprolactone. Pour fixer les idées, cette zone de fusion se situe à 59-64°C pour l'homopolymère de l'ε-caprolactone.

Nonobstant leur rigidité accrue, les nouveaux films semi-rigides en poly-ε-caprolactone selon l'invention présentent, en outre, un allongement à la rupture élevé. L'allongement à la rupture est évalué selon la norme ISO précitée et sur le même type d'échantillon mais avec une vitesse de traction de 500 mm/min. En général, l'allongement à la rupture tel que défini et exprimé en % ($\varepsilon_B$) est tel que le produit du module en traction dans le sens transversal exprimé en MPa ($E_T$) par le taux d'allongement exprimé en % ($\varepsilon_B$) est supérieur à 300 000 MPa. Le plus souvent le produit $E_T \cdot \varepsilon_B > 400\,000$ MPa .

L'épaisseur des films en poly-ε-caprolactones selon l'invention ne dépasse généralement pas 0,75 mm. Le plus souvent, elle ne dépasse pas 0,5mm et, de préférence, pas 0,25 mm.

On donne par ailleurs la préférence aux films en poly-ε-caprolactone dont la masse moléculaire moyenne en poids s'élève à 80 000 g/mole au moins et plus particulièrement encore à 90 000 g/mole au moins. En général, la masse moléculaire moyenne en poids des poly-ε-caprolactones constituant les films selon l'invention ne dépasse pas 200 000 g/mole. Le plus souvent, elle ne dépasse pas 150 000 g/mole et, plus particulièrement encore 130 000 g/mole.

Des films particulièrement préférés sont, par ailleurs, ceux constitués de poly-ε-caprolactones obtenues par polymérisation à l'intervention de trialkoxyde d'aluminium comme amorceur. Par trialkoxyde d'aluminium, on entend tout composé organoaluminique contenant trois liens aluminoxane-carbone(>Al-O-C), et les mélanges de tels composés.

L'utilisation de trialkoxydes d'aluminium pour produire des poly-$\varepsilon$-caprolactones de masses moléculaires moyennes élevées par polymérisation continue de l'$\varepsilon$-caprolactone en masse fondue dans une extrudeuse (procédé couramment désigné sous le vocable "polymérisation par extrusion réactive") est décrite dans la demande de brevet EP-A- 0 626 405 au nom du titulaire. Selon ce document, les joncs extrudés à la sortie de l'extrudeuse (agissant comme réacteur de polymérisation), sont refroidis avant d'être granulés en vue d'une mise en oeuvre ultérieure. Comme mentionné plus haut, les films en poly-$\varepsilon$-caprolactone fabriqués à partir de granules présentent des modules en traction de l'ordre de 300 à 400 MPa.

L'invention concerne également un procédé pour produire un film en poly-$\varepsilon$-caprolactone selon l'invention.

Selon ce procédé, on extrude la poly-$\varepsilon$-caprolactone directement en ligne avec sa fabrication à l'intervention de trialkoxyde d'aluminium comme amorceur au travers d'une filière à une température ne dépassant pas 160°C.

De préférence, la température de la matière dans la filière ne dépasse pas 150°C. Elle s'élève avantageusement de 120 à 140°C.

Quoique tout type de filière adaptée pour l'extrusion de films thermoplastiques, telle que par exemple une filière annulaire (pour la fabrication de films soufflés) ou une filière plate puisse convenir pour l'extrusion du film en poly-$\varepsilon$-caprolactone selon le procédé de l'invention, on donne la préférence à une filière plate.

Il est par ailleurs essentiel que la poly-$\varepsilon$-caprolactone soumise à l'extrusion soit substantiellement anhydre et ne contienne pas plus de 500 mg d'eau par kg de poly-$\varepsilon$-caprolactone. Le plus souvent, elle n'en contiendra pas plus de 100 mg et plus particulièrement encore pas plus de 50 mg par kg de poly-$\varepsilon$-caprolactone.

Un aspect surprenant du procédé de l'invention réside dans le fait que, toutes autres choses étant égales, l'extrusion du film directement en ligne avec la fabrication de poly-$\varepsilon$-caprolactone conduit à une rigidification appréciable et à une amélioration de la stabilité dimensionnelle des films par comparaison avec les films produits par extrusion de granules de la même poly-$\varepsilon$-caprolactone.

La fabrication de la poly-$\varepsilon$-caprolactone à l'intervention de trialkoxydes d'aluminium qui précède l'extrusion en ligne d'un film en poly-$\varepsilon$-caprolactone selon le procédé de l'invention peut s'effectuer dans tout type de réacteur, tel qu'un réacteur continu ou un réacteur discontinu. Dans ce dernier cas, on adaptera une pompe à engrenage alimentant une filière à la sortie du réacteur discontinu. On préfère néanmoins fabriquer la poly-$\varepsilon$-caprolactone par polymérisation continue d'$\varepsilon$-caprolactone en masse fondue dans une extrudeuse (c'est-à-dire par extrusion réactive). Dans ce ces, on adaptera une filière et, de préférence, une filière plate à la sortie de l'extrudeuse. De manière connue en soi, le film sortant de la filière est refroidi sur un chill roll, après quoi le film est enroulé sur un mandrin.

La nature des trialkoxydes utilisables pour amorcer la polymérisation de l'$\varepsilon$-caprolactone n'est pas particulièrement critique pour autant qu'il s'agisse de composés organoaluminiques contenant trois liens aluminoxane-aluminium (>Al-O-C).

A titres d'exemples de pareils trialkoxydes, on peut mentionner ceux décrits dans la demande EP-A-0 626 405 répondant à la formule générale ci-dessous:

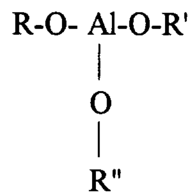 (I)

dans laquelle:

- R, R' et R" représentent indépendamment l'un de l'autre un radical hydrocarboné linéaire ou ramifié contenant de 1 à 16 atomes de carbone, de préférence de 2 à 8 atomes de carbone.

De préférence, R, R' et R" sont identiques et présentent un radical alkyle linéaire ou ramifié contenant de 2 à 6 atomes de carbone.

Il est entendu que les trialkoxydes de ce type peuvent être préparés "in situ" par mise en oeuvre de trialkylaluminium et d'alcools.

A titre d'exemples représentatifs des trialkoxydes de type (I), on peut citer le tri-isopropoxyde d'aluminium et le tri-sec-butoxyde d'aluminium.

A titre d'exemples de trialkoxydes également utilisables, on peut mentionner les trialkoxydes d'aluminium dont au moins un radical alkoxy comprend, outre l'atome d'oxygène constitutif du lien aluminoxane (Al-O), au moins un autre atome d'oxygène, ce dernier étant de préférence présent sous la forme d'une fonction ester ou d'une fonction éther.

A titre d'exemples de trialkoxydes d'aluminium contenant une liaison éther, on peut mentionner les trialkoxydes répondant à la formule générale statistique:

$$(R_1\text{-}O)_{3-n}\text{-}Al\text{-}(O\text{-}R_2\text{-}O\text{-}R_3)n \qquad (II)$$

dans laquelle:

n représente un nombre de 1 à 3,
$R_1$ représente un radical alkyle, linéaire ou ramifié, contenant de 1 à 10 atomes de carbone, de préférence de 2 à 8 atomes de carbone,
$R_2$ représente un radical alkylène, linéaire ou ramifié, contenant de 1 à 10 atomes de carbone, de préférence de 2 à 8 atomes de carbone,
$R_3$ représente un radical alkyle ou aryle contenant de 1 à 6 atomes de carbone, de préférence un radical alkyle contenant de 1 à 4 atomes de carbone.
A titre d'exemple représentatif de trialkoxydes de type (II), on peut citer le tri(méthoxyéthoxy)aluminium.

A titre d'exemples de trialkoxydes d'aluminium contenant une liaison ester, on peut mentionner les trialkoxydes répondant à la formule générale statistique:

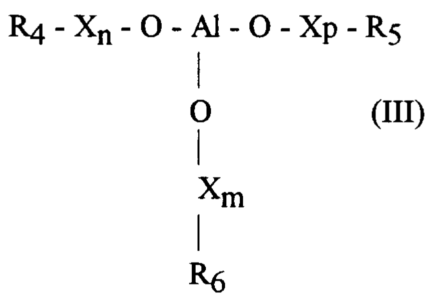

(III)

dans laquelle:

X représente un radical dérivé de l'ε-caprolactone de formule

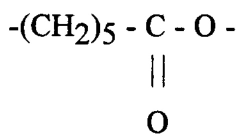

n, m et p représentent indépendemment l'un de l'autre des nombres entiers de 0 à 12 dont la somme vaut au moins 1 et ne dépasse pas 12 et vaut, de préférence, au moins 3 et ne dépasse pas 10,
$R_4$, $R_5$ et $R_6$ représentent indépendemment l'un de l'autre un radical alkyle linéaire ou ramifié contenant de 1 à 10 atomes de carbone et sont, de préférence, identiques et représentent un radical alkyle, linéaire ou ramifié, contenant de 2 à 8 atomes de carbone.
A titre d'exemple représentatif des trialkoxydes de type (III), on peut citer le trialkoxyde (III) dans lequel la somme de n, m et p vaut 8 et $R_4$, $R_5$ et $R_6$ représentent le radical sec-butyle.

La quantité d'amorceur de polymérisation à mettre en oeuvre à la polymérisation de l'ε-caprolactone dépend essentiellement des masses moléculaires moyennes en poids ($M_w$) visées. Il existe une relation pratiquement linéaire, indépendante de la température de polymérisation, entre le rapport des quantités de lactone et d'amorceur mis en oeuvre et la masse moléculaire moyenne en poids ($M_w$) de la poly-ε-caprolactone produite, de sorte qu'il est aisé de calculer les quantités relatives d'amorceur à mettre en oeuvre. C'est ainsi que, dans le cas de la fabrication continue d'ε-caprolactone dans une extrudeuse, la relation entre les débits d'alimentation de l'extrudeuse en lactone et en amorceur répond à l'équation suivante:

$$M_w = \frac{2,25}{n} \times \frac{\text{débit d'alimentation en lactone (en g/min)}}{\text{débit d'alimentation en amorceur (nombre de moles d'Al/min)}}$$

dans laquelle n représente le nombre de liens aluminoxane- carbone présents dans une mole d'amorceur.

Les conditions générales de la polymérisation en masse fondue de l'ε-caprolactone à l'intervention de trialkoxydes d'aluminium tels que définis ci-dessus sont celles décrites dans la demande de brevet EP-A- 0 626 405. Idéalement, tous les réactifs mis en oeuvre à la polymérisation doivent être substantiellement anhydres. Néanmoins, des teneurs résiduelles en eau ne dépassant pas 100 mg/kg de lactone et plus particulièrement encore ne dépassant pas 50 mg/kg de lactone pourront être tolérées, car elles n'ont pas d'influence significative sur la masse moléculaire moyenne en poids des poly-ε-caprolactones.

La température de polymérisation n'ayant pas d'effet significatif sur les masses moléculaires moyennes des poly-ε-caprolactones produites, celle-ci peut sans inconvénient fluctuer dans une assez large mesure et ne doit pas nécessairement être la même dans les différentes zones du réacteur de polymérisation. Toutefois, il est impératif qu'elle soit au moins égale à la température de fusion des poly-ε-caprolactones produites. Pour fixer les idées, la température minimale pour l'homopolymérisation de l'ε-caprolactone se situera à 60°C. Des températures plus élevées permettent d'accélérer la vitesse de polymérisation. En pratique, on ne dépassera généralement pas 160°C et, de préférence pas 150°C, de telle sorte de ne pas devoir procéder à un refroidissement intermédiaire entre la fabrication de la polylactone et son extrusion en ligne au travers d'une filière pour produire les films selon l'invention. Dans cette zone de températures, on atteint généralement des taux de conversion et des rendements proches de 100% pour des temps de séjour moyens de la masse réactionnelle dans le réacteur ne dépassant pas environ 15 minutes et le plus souvent ne dépassant pas 10 minutes, voire 5 minutes.

Il est entendu que l'on peut incorporer aux poly- ε-caprolactones divers additifs usuels, tels que par exemple des stabilisants thermiques et des antioxydants, des agents nucléants, des agents dits antiblocking et des charges. Ces additifs seront avantageusement incorporés à la poly-ε-caprolaconte fondue en fin de polymérisation et avant extrusion au travers d'une filière. Les additifs mis en oeuvre à l'extrusion de films en poly-ε-caprolactone seront substantiellement anhydres. On peut tolérer la présence d'une quantité d'eau totale allant jusqu'à 1g d'eau par kg du mélange poly-ε-caprolactone plus additif(s) soumis à l'extrusion.

A titre d'exemples non limitatifs de stabilisants thermiques et d'antioxydants, on peut mentionner des produits du type des phénols substitués tels que le tétrakis [méthylène-(3,5--di-t-butyl-4-hydroxy-dihydrocinnamate] méthane ou encore le 4,4'-butylidène-bis(6-t-butyl-méthacrésol, ainsi que les cabodiimides. A titre d'exemples non limitatifs d'agents nucléants, on peut mentionner le nitrure de bore ou encore le di-p-éthylbenzylidène sorbitol et à titre d'agent "antiblocking" la silice. Les additifs précités seront, le cas échéant, incorporés en les quantités usuelles. En général, la quantité totale des additifs précités ne dépassera pas 5 parties pour 100 parties en poids de poly-ε-caprolactone.

Pour ce qui concerne les charges pouvant être incorporées aux poly-ε-caprolactones, celles-ci peuvent par exemple être choisies parmi le carbonate de calcium (naturel ou précipité), le sulfate de calcium (de préférence sous forme anhydre), le dolomite, le talc, le kaolin. Conviennent également des charges organiques telles que l'amidon (plastifié ou non plastifié), la farine de bois, la cellulose et ses dérivés ou encore du papier recyclé broyé. Ces charges peuvent, le cas échéant, avoir subi un traitement de surface pour faciliter leur dispersion dans la poly-ε-caprolactone. Parmi les charges précitées, on donne la préférence aux charges minérales et en particulier au carbonate de calcium naturel. En général, la quantité de charge(s) incorporée à la poly-ε-caprolactone ne dépassera pas 150 parties en poids et le plus souvent 100 parties en poids pour 100 parties en poids de poly-ε-caprolactone.

La présente invention concerne également un film semi-rigide en poly-ε-caprolactone chargée dont la masse moléculaire moyenne en poids est égale à 75 000g/mole au moins et qui présente un module en traction d'au moins 600 MPa dans le sens longitudinal et transversal et un retrait ne dépassant pas 1% dans les deux directions en-dessous de la zone de fusion de la poly-ε-caprolactone. Le film en poly-ε-caprolactone chargée peut contenir jusqu'à 150 parties de charges pour 100 parties en poids de poly-ε-caprolactone. Celles-ci seront avantageusement choisies parmi les charges minérales, telles que par exemple le carbonate de calcium naturel.

L' exemple qui suit est destiné à illustrer l'invention.

Il concerne la fabrication d'un film en homopolymère d'ε-caprolactone par extrusion au travers d'une filière plate adaptée directement à la sortie d'une extrudeuse à double vis contrarotatives (de type Plastirecroder PL - 2000 BRABENDER) consitutant le réacteur continu de polymérisation dans lequel l'ε-caprolactone est polymérisée à l'intervention d'un amorceur constitué par un trialkoxyde comprenant une fonction ester de type (III) dans laquelle la somme de n, m et p vaut 8 et $R_1$, $R_2$ et $R_3$ représentent tous trois un radical sec-butyle.

Cet amorceur qui a été préparé en ajoutant à 25°C de l'ε-caprolactone sur du tri-sec butoxyde d'aluminium dans un rapport molaire de 8:1 contient 0,86 mole d'aluminium par kg.

Le fourreau de l'extrudeuse est divisé en quatre zones de même longueur se trouvant aux températures suivantes:

zone 1: 85°C

zone 2: 135°C
zone 3: 130°C
zone 4: 130°C

L'extrudeuse est munie d'une filière plate de 260 mm de largeur, inclinée à 45°C vers le bas par rapport à l'axe de l'extrudeuse. La température de la filière est maintenue à 140°C. Un chill-roll, à un tambour, réfigéré à 0°C, recueille le film à la sortie de la filière. Le film est ensuite enroulé sur un mandrin.

L'ε-caprolactone est introduite en continu à température ambiante dans la zone 1 de l'extrudeuse via une pompe volumétrique à raison de 5,7 kg/h. L'amorceur, préchauffé à 90°C, est introduit séparément en continu dans cette même zone au moyen d'une pompe à membrane en quantité telle que le rapport massique entre l'alimentation en ε-caprolactone et en amorceur soit égal à 121. La masse molaire moyenne en poids calculée s'élève donc approximativement à 105 000 g/mole. La vitesse de rotation des vis est maintenue constante et égale à 20 t/min. La température de la poly-ε-caprolactone mesurée à la sortie de la vis (température de polymérisation) s'élève à 132°C. Le temps de séjour moyen dans l'extrudeuse est estimé à environ 2 minutes. Le film en poly-ε-caprolactone produit présente une épaisseur de 0,15 mm. La masse moléculaire moyenne en poids mesurée ($M_w$) de la PCL s'élève à 110 000 g/mole et le rapport $M_w/M_n$ = 2,25.

Le module en traction du film est évalué selon la norme ISO527-3/1993 sur des éprouvettes de type 2 avec une vitesse de traction de 1 mm/min.

L'allongement à la rupture est évalué selon la même norme sur le même type d'éprouvettes avec une vitesse de traction de 500 mm/min. Les valeurs moyennes mesurées sur 5 échantillons sont les suivantes: module en traction (E) :

- 950 MPa dans le sens longitudinal (sens de l'extrusion)
- 1230MPa dans le sens transversal allongement à la rupture exprimé en % ($\varepsilon_B$) :
- 670 dans le sens longitudinal
- 485 dans le sens transversal

Le produit de E (MPa) par ($\varepsilon_B$) s'élève à

- 636 500 MPa dans le sens longitudinal
- 596 550 MPa dans le sens transveral.

La stabilité dimensionnelle du film à 57°C est par ailleurs évaluée de la manière suivante:on découpe dans le film un carré de 100 mm de côté, avec un bord parrallèle au sens de la mise en oeuvre. L'échantillon, posé sur un support lisse enduit de talc pour éviter toute adhérence, est alors introduit pendant 15 minutes dans une étuve ventilée à 57°C. Les dimensions de l'échantillon sont mesurées avant et après le traitement, selon une droite dessinée à environ 2 cm de chaque bord (4 mesures par échantillon). Les changements de dimension suivants ont été observés après ce traitement (valeurs moyennes pour 2 échantillons avec 4 mesures par échantillon):

- sens longitudinal: + 0,2%
- sens transversal: - 0,3%

A titre comparatif, on a mesuré dans les mêmes conditions que celles précitées le module en traction, l'allongement à la rupture et la stabilité dimensionnelle d'un film biorienté d'une épaisseur de 0,18 mm en poly-ε-caprolactone commerciale (vendue sous la marque enregistrée CAPA, de type 680) dont la masse moléculaire moyenne en poids s'élève à 120 000 g/mole. Ce film a été obtenu par étirage biaxial d'une plaque ayant une épaisseur de 1 mm extrudée à partir de granules de poly-ε-caprolactone. Un échantillon de 17 cm de côté prélevé dans la plaque a été étiré, à une vitesse constante de 3 m/min, dans un four ventilé à 58°C après 5 minutes d'équilibration thermique. Les dimensions finales valaient 3 fois la taille initiale (superficie x 9), l'épaisseur se trouvant simultanément réduite à 0,18 mm.

Les valeurs moyennes mesurées sur 5 échantillons sont les suivantes: module en traction (E) :

- 495 MPa dans le sens longitudinal (sens de l'extrusion)
- 510 MPa dans le sens transversal

allongement à la rupture exprimé en % ($\varepsilon_B$) :

- 520 dans le sens longitudinal
- 465 dans le sens transversal

Le produit de E (MPa) par ($\varepsilon_B$) s'élève à

- 257 400 MPa dans le sens longitudinal
- 237 150 MPa dans le sens transveral.

Les changements de dimension suivants ont été observés: retrait de 2,2% dans les deux sens.

**Revendications**

1. Film semi-rigide en poly-ε-caprolactone dont la masse moléculaire moyenne en poids est égale à 75 000 g/mole au moins, caractérisé en ce qu'il présente un module en traction d'au moins 600 MPa dans le sens longitudinal et transversal et un retrait ne dépassant pas 1% dans les deux directions en-dessous de la zone de fusion de la poly-ε-caprolactone.

2. Film semi-rigide en poly-ε-caprolactone selon la revendication 1, caractérisé en ce que son module en traction ne dépasse pas 2 000 MPa.

3. Film semi-rigide en poly-ε-caprolactone selon les revendications 1 ou 2, caractérisé en ce qu'il présente un retrait ne dépassant pas 0,5% dans les deux directions en-dessous de la zone de fusion de la poly-ε-caprolactone.

4. Film semi-rigide en poly-ε-caprolactone selon les revendications 1 à 3, caractérisé en ce que le produit du module en traction dans le sens transversal exprimé en MPa par le taux d'allongement à la rupture exprimé en % est supérieur à 300 000 MPa.

5. Film semi-rigide en poly-ε-caprolactone selon les revendications 1 à 4, caractérisé en ce que la poly-ε-caprolactone présente une masse moléculaire moyenne en poids au moins égale à 90 000 mole/g et ne dépassant pas 200 000 g/mole.

6. Film semi-rigide en poly-ε-caprolactone selon les revendications 1 à 5, caractérisé en ce que la poly-ε-caprolactone est obtenue par polymérisation à l'intervention de trialkoxyde d'aluminium comme amorceur.

7. Film semi-rigide en poly-ε-caprolactone selon les revendications 1 à 6, caractérisé en ce que la poly-ε-caprolactone est un homopolymère d'ε-caprolactone.

8. Film semi-rigide en poly-ε-caprolactone selon la revendication 1, caractérisé en ce que la poly-ε-caprolactone contient pour 100 parties en poids jusqu'à 150 parties en poids de charges.

9. Procédé pour produire un film en poly-ε-caprolactone selon les revendications 1 à 8, caractérisé en ce qu'on extrude la poly-ε-caprolactone directement en ligne avec sa fabrication à l'intervention de trialkoxyde d'aluminium au travers d'une filière dont la température ne dépasse pas 160°C.

10. Procédé pour produire un film en poly-ε-caprolactone selon la revendication 9, caractérisé en ce que la température de la matière dans la filière est comprise entre 120 et 140°C.

11. Procédé pour produire un film en poly-ε-caprolactone selon les revendications 9 ou 10, caractérisé en ce que la filière est une filière plate.

12. Procédé pour produire un film en poly-ε-caprolactone selon les revendications 9 à 11, caractérisé en ce que la fabrication de la poly-ε-caprolactone précédant l'extrusion du film s'effectue par polymérisation continue d'ε-caprolactone en masse fondue dans une extrudeuse.

13. Application du procédé selon les revendications 9 à 12 à la fabrication d'un film en homopolymère de l'ε-caprolactone.

Office européen des brevets

# RAPPORT DE RECHERCHE EUROPEENNE

Numero de la demande
EP 96 20 3142

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 626 405 A (SOLVAY)<br>* le document en entier * | 1-13 | C08J5/18<br>C08K3/00<br>C08K5/00<br>//C08L67:04 |
| A | DATABASE WPI<br>Section Ch, Week 9326<br>Derwent Publications Ltd., London, GB;<br>Class A23, AN 93-208900<br>XP002009295<br>& JP 05 132 572 A (GUNZE KK) , 28 Mai 1993<br>* abrégé * | 1-13 | |

| DOMAINES TECHNIQUES RECHERCHES (Int.Cl.6) |
|---|
| C08J<br>C08K |

Le présent rapport a été établi pour toutes les revendications

| Lieu de la recherche | Date d'achèvement de la recherche | Examinateur |
|---|---|---|
| LA HAYE | 28 Février 1997 | Tarrida Torrell, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)